# EUROPEAN PATENT SPECIFICATION

(11) **EP 4 203 599 B1**
(45) Date of publication and mention of the grant of the patent: **18.03.2026**
(21) Application number: 21857434.1
(22) Date of filing: 15.07.2021
(51) Int. Cl.: H04W 74/08, H04B 17/318, H04L 5/00, H04W 52/12, H04W 52/14, H04W 52/48, H04W 52/50, H04W 74/00, H04W 74/0833, H04W 74/0836

(54) **ACCESS OPTIMIZATION METHODS, COMPUTER-READABLE STORAGE MEDIUM AND COMPUTER PROGRAM**
ZUGANGSOPTIMIERUNGSVERFAHREN, COMPUTERLESBARES SPEICHERMEDIUM UND COMPUTERPROGRAMM
PROCÉDÉ D'OPTIMISATION D'ACCÈS, SUPPORT DE STOCKAGE LISIBLE PAR ORDINATEUR ET LOGICIEL D'ORDINATEUR

(30) Priority: 21.08.2020 CN 202010851750
(43) Date of publication of application: 28.06.2023
(73) Proprietor: ZTE Corporation, Shenzhen, Guangdong 518057 (CN)
(72) Inventor: WEI, Hao, Shenzhen, Guangdong 518057 (CN); MOU, Haining, Shenzhen, Guangdong 518057 (CN); MAO, Huanhuan, Shenzhen, Guangdong 518057 (CN); LI, Jie, Shenzhen, Guangdong 518057 (CN)
(74) Representative: Canzler & Bergmeier Patentanwälte Partnerschaft mbB
(86) International application number: PCT/CN2021/106519
(87) International publication number: WO 2022/037339

(56) References cited:
- WO-A1-2020/042962
- CN-A- 108 024 366
- CN-A- 109 757 132
- CN-A- 110 859 011
- US-A1- 2016 219 473
- US-A1- 2020 084 805
- US-A1- 2020 146 069
- US-A1- 2021 185 736
- "3rd Generation Partnership Project; Technical Specification Group Radio Access Network; NR; Medium Access Control (MAC) protocol specification (Release 16)", 24 July 2020 (2020-07-24), XP052353418, Retrieved from the Internet <URL:https://ftp.3gpp.org/tsg_ran/WG2_RL2/Specifications/202007_final_specs_after_RAN_88/38321-g10.zip 38321-g10.docx> [retrieved on 20200724]
- INTEL CORPORATION: "PHY layer enhancement for NR IAB", 3GPP DRAFT; R1-1806551, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, 20 May 2018 (2018-05-20), Busan, South Korea, XP051441753

## Description

### TECHNICAL FIELD

An embodiment of the present disclosure relates to but is not limited to the technical field of communication, in particular to a method for access optimization which is performed by a base station, a method for access optimization which is performed by a terminal device, a computer-readable storage medium and a computer program.

### BACKGROUND

During a random-access procedure, the base station sends a Synchronization Signal Block (SSB) signal that carries a Reference Signal Receiving Power (RSRP) threshold. A user measures the SSB signal to acquire the measured RSRP value, and parses the RSRP threshold, and then compares the measured RSRP value with the RSRP threshold. If the measured RSRP value is less than the RSRP threshold, the user selects a four-step random access mode, otherwise, the user selects a two-step random access mode, and then the base station allocates respective resources for each of the random-access modes. However, the likelihood of collision would increase in case that too many users are accessing with one random access mode, leading to an increase in the likelihood of the system access failure and a decrease in the resource utilization rate.

Patent literature US 2020/146069 A1 provides a method for a user equipment (UE) for performing a random access (RA) procedure.

### SUMMARY

The following is a summary of the subject matter described herein. This summary is not intended to limit the scope of protection of the claims.

The invention is set out in the appended claims.

Provided are a method for access optimization which is performed by a base station, a method for access optimization which is performed by a terminal device, a computer-readable storage medium and a computer program in some embodiments of the present disclosure.

According to an embodiment of the present disclosure, there is provided a method for access optimization, which is performed by a base station, the method includes, sending a synchronization signal block (SSB) signal carrying a reference signal receiving power (RSRP) threshold to a terminal device; acquiring an access event parameter of the terminal device accessing the base station based on the RSRP threshold; adjusting the RSRP threshold according to the access event parameter and a preset parameter; and sending an SSB signal carrying the adjusted RSRP threshold to the terminal device, such that the terminal device selects a random access mode for accessing the base station according to the adjusted RSRP threshold.

According to another embodiment of the present disclosure, there is provided a method for access optimization, which is performed by a terminal device, the method includes, acquiring a synchronization signal block (SSB) signal carrying a reference signal receiving power (RSRP) threshold sent by a base station; accessing the base station according to the RSRP threshold, such that the base station acquires an access event parameter of the terminal device accessing the base station and adjusts the RSRP threshold according to the access event parameter; acquiring another SSB signal carrying the adjusted RSRP threshold sent by the base station; and selecting random access for accessing the base station according to the adjusted RSRP threshold.

According to yet another embodiment of the present disclosure, there is further provided a computer-readable storage medium storing a computer-executable instruction which, when executed by a processor causes the processor to carry out any one of the methods as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG 1 depicts a schematic diagram showing a system architecture platform for performing a method for access optimization according to an embodiment of the present disclosure;
FIG. 2 depicts a flowchart showing a method for access optimization according to an embodiment of the present disclosure;
FIG. 3 depicts a flowchart showing a method for access optimization according to another embodiment of the present disclosure;
FIG. 4 depicts a flowchart showing a method for access optimization according to yet another embodiment of the present disclosure;
FIG. 5 depicts a flowchart showing a method for access optimization according to yet another embodiment of the present disclosure;
FIG. 6 depicts a flowchart showing a method for access optimization according to yet another embodiment of the present disclosure;
FIG. 7 depicts a flowchart showing a method for access optimization according to yet another embodiment of the present disclosure;
FIG. 8 depicts a flowchart showing a method for access optimization according to yet another embodiment of the present disclosure;
FIG. 9 depicts a flowchart showing a method for access optimization according to yet another embodiment of the present disclosure;
FIG. 10 depicts a flowchart showing a method for access optimization according to yet another embodiment of the present disclosure;
FIG. 11 depicts a flowchart showing a method for access optimization according to yet another embodiment of the present disclosure;
FIG. 12 depicts a flowchart showing a method for access optimization according to yet another embodiment of the present disclosure;
FIG. 13 depicts a flowchart showing a method for access optimization according to yet another embodiment of the present disclosure;
FIG. 14 depicts a flowchart showing a method for access optimization according to yet another embodiment of the present disclosure;
FIG. 15 depicts a flowchart showing a method for access optimization according to yet another embodiment of the present disclosure;
FIG. 16 depicts a flowchart showing a method for access optimization according to yet another embodiment of the present disclosure;
FIG. 17 depicts a flowchart showing a method for access optimization according to yet another embodiment of the present disclosure;
FIG. 18 depicts a flowchart showing a method for access optimization according to yet another embodiment of the present disclosure;
FIG. 19 depicts a flowchart showing a method for access optimization according to yet another embodiment of the present disclosure;
FIG. 20 depicts a flowchart showing a method for access optimization according to yet another embodiment of the present disclosure;
FIG. 21 depicts a flowchart showing a method for access optimization according to yet another embodiment of the present disclosure; and
FIG. 22 depicts a flowchart showing a method for access optimization according to yet another embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It should be noted that although the devices are shown with individual functional modules in the schematic diagram and the logical sequences are shown in the flow chart, in some cases, the devices can have different modules than those shown and the steps can be executed in a different order than those shown. The terms "first" and "second", if used in the description, claims and the drawings are intended to distinguish similar objects, and do not necessarily imply any specific order or sequence.

Provided are a method for access optimization, a base station, a terminal device, and a computer-readable storage medium in some embodiments of the present disclosure. The method includes, a base station sends a synchronization signal block (SSB) signal carrying a reference signal receiving power (RSRP) threshold to a terminal device; the terminal device, measures the SSB signal to acquire a measured RSRP value and accesses the base station according to the measured RSRP value and an RSRP threshold, then the base station acquires an access event parameter of the terminal device accessing the base station and adjusts the RSRP threshold according to the access event parameter and a preset parameter
to acquire an adjusted RSRP threshold, then the base station sends an SSB signal carrying the adjusted RSRP threshold to the terminal device, such that the terminal device selects a random access mode for accessing the base station according to the adjusted RSRP threshold. Therefore, the base station can adjust the RSRP threshold according to the actual access event parameter and preset parameter of the terminal device. And the number of accessing terminal devices in different random-access modes and the resource allocation can be controlled by the adjustment of the RSRP threshold, thereby improving the success rate of assessing for terminal devices and resource utilization efficiency.

Some embodiments of the present disclosure will be further illustrated with reference to the drawings.

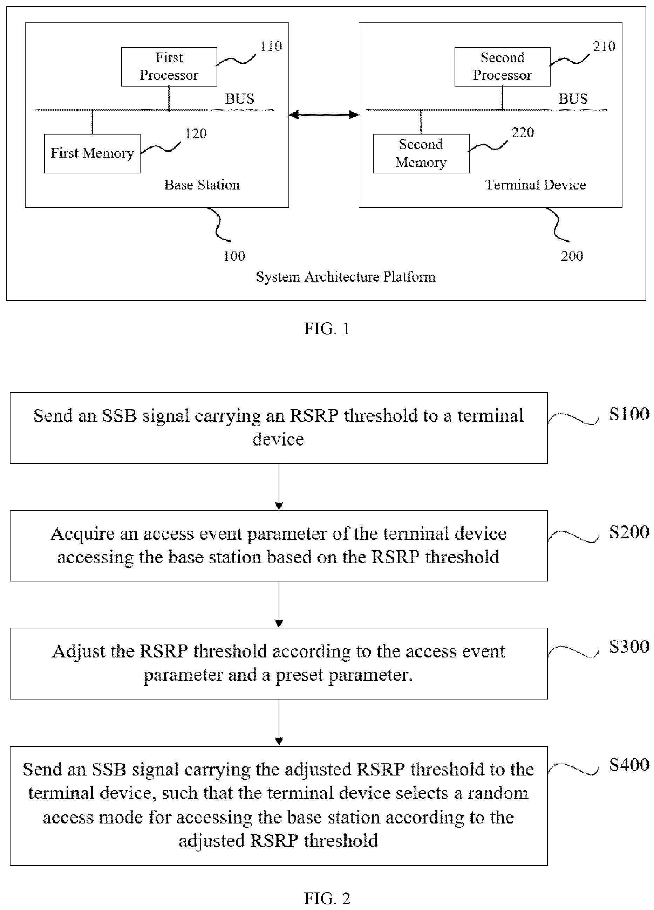

As shown in FIG. 1, which depicts a schematic diagram showing a system architecture platform for performing a method for access optimization according to an embodiment of the present disclosure. In the embodiment as shown in FIG. 1, the system architecture platform includes a base station 100 and a terminal device 200. The base station 100 is provided with a first processor 110 and a first memory 120, and the terminal device 200 is provided with a second processor 210 and a second memory 220, where the first processor 110 and the first memory 120 can be connected by a bus or other means, and the second processor 210 and the second memory 220 can be connected by a bus or other means. The connection is achieved through a bus in FIG. 1 by way of an example.

As a non-transitory computer-readable storage medium, the first memory 120 and the second memory 220 can be configured to store non-transitory software programs and non-transitory computer-executable programs. In addition, the first memory 120 and the second memory 220 may include high-speed random-access memories, and may also include non-transitory memories, such as at least one disk memory device, flash memory device, or other non-transitory solid-state memory devices. In some embodiments, the first memory 120 may include a memory remotely arranged relative to the first processor 110, and the second memory 220 may include a memory remotely arranged relative to the second processor 210, and these remote memories may be connected to the system architecture platform through a network. Examples of the above networks include, but are not limited to, the Internet, intranet, local area network, mobile communication network, and combinations thereof.

It can be understood by those having ordinary skills in the art that the system architecture platform can be applied to 3G communication network systems, LTE communication network system, 5G communication network systems, or subsequently evolved mobile communication network systems, etc. This embodiment is not limited thereto.

It can be understood by those having ordinary skills in the art that the system architecture platform shown in FIG. 1 does not constitute a limitation to the embodiment of the present disclosure, and may include more or fewer components than those shown, or some components may be combined, or have different component arrangements.

In the system architecture platform shown in FIG. 1, the first processor 110 may call the program for access optimization stored in the first memory 120. Alternatively, the second processor 210 may call the program for access optimization stored in the second memory 220. Thereby the method for access optimization is performed.

Based on the above system architecture platform, various embodiments of the method for access optimization of the present disclosure are proposed below.

As shown in FIG. 2, which depicts a flowchart showing a method for access optimization according to an embodiment of the present disclosure. The method includes but is not limited to operations S100, S200, S300 and S400.

At S100, an SSB signal carrying an RSRP threshold is sent to a terminal device.

In an embodiment, during random access, the base station sends the SSB signal that carries the RSRP threshold which serves as the basis for the terminal device to select the random-access mode in the subsequent operations.

At S200, an access event parameter of the terminal device accessing the base station based on the RSRP threshold, is acquired.

In an embodiment, upon receiving the SSB signal sent by the base station, the terminal device will measure the SSB signal to acquire the measured RSRP value, and at the same time, the terminal device parses the SSB signal to acquire the RSRP threshold carried in the SSB signal. Then the terminal device selects a random-access mode corresponding to the comparison of the measured RSRP value and the RSRP threshold, to access the base station, based on the comparison. And finally, the base station can acquire the access event parameters of the terminal device accessing the base station according to the access of the terminal device.

It should be noted that in the actual random-access procedure, when the measured RSRP value is greater than or equal to the RSRP threshold, the terminal device will choose a two-step random access mode to access the base station. When the measured RSRP value is less than the RSRP threshold, the terminal device will choose a four-step random access mode to access the base station.

It is worth noting that the above access event parameter may include, but are not limited to, at least one of, the number of access failure events, the ratio of access failure events to total access events in the same random-access mode, or the ratio of access failure events to access success events in the same random access mode.

At S300, the RSRP threshold is adjusted according to the access event parameter and a preset parameter.

In an embodiment, after the base station acquires the access event parameter of the terminal device accessing the base station, the access event parameter is compared with the preset parameter, and the RSRP threshold is adjusted according to the numerical comparison result of the two parameters, so as to generate the adjusted RSRP threshold.

It can be understood that the above preset parameter can be preset in the base station or acquired by the base station somehow.

At S400, an SSB signal carrying the adjusted RSRP threshold is sent to the terminal device, such that the terminal device selects a random-access mode for accessing the base station according to the adjusted RSRP threshold.

In an embodiment, after the base station acquires the adjusted RSRP threshold, if the base station sends the SSB signal later, the RSRP threshold carried in the SSB signals sent later will be updated to the adjusted RSRP threshold, so that the terminal device can select an appropriate random-access mode to access the base station according to the adjusted RSRP threshold.

In an embodiment, due to the method for access optimization with the above operations S100, S200, S300 and S400, the base station can adjust the RSRP threshold according to the actual access event parameter and preset parameter of the terminal device. And the number of accessing terminal devices in different random-access modes and the resource allocation can be controlled by the adjustment of the RSRP threshold, thereby improving the success rate of assessing for terminal devices and resource utilization efficiency.

It should be noted that the above two-step random access mode can be embodied as follows. The terminal device sends a MsgA (Class A message) to the base station according to the SSB signal, and the MsgA includes a random-access preamble and Channel State Information (CSI), thereby initiating a request for contention access and reporting the CSI. Then, after receiving the MsgA, the base station sends a MsgB (Class B message) that includes a Random-Access Response (RAR) and contention resolution message to the terminal device, so as to respond to the request for contention access initiated by the terminal device and indicate a contention resolution based on the CSI.

And the above four-step random access mode can be embodied as follows. The terminal device sends a Msg1 (the first message) to the base station, and the Msg1 includes a random-access preamble which is initiative of a request for contention access to the base station, and a contention is present in terminal devices with the same random-access preamble. After receiving Msg1, the base station sends a Msg2 (second message) to the terminal device, where the Msg2 is RAR which is responsive to the request for contention access initiated by the terminal device. Then the terminal device sends a Msg3 (the third message) for reporting the CSI according to the indication from the base station, to the base station, where the indication can be RAR or SSB signal. Finally, the base station sends a Msg4 (the fourth message) which includes a message of contention resolution, to the terminal device, indicating the contention resolution made by the base station according to the CSI.

In addition, it is worth noting that the above access failure event refers to the failure of the terminal device in accessing the base station. The above access success event refers to the succeed of the terminal device in accessing the base station. The access failure event can be defined by the base station according to the specific design.

It can be understood that the method for access optimization according to an embodiment of the present disclosure includes but is not limited to the implementation on devices and chips such as Digital Signal Processor (DSP), Field Programmable Gate Array (FPGA) or Application Specific Integrated Circuit (ASIC).

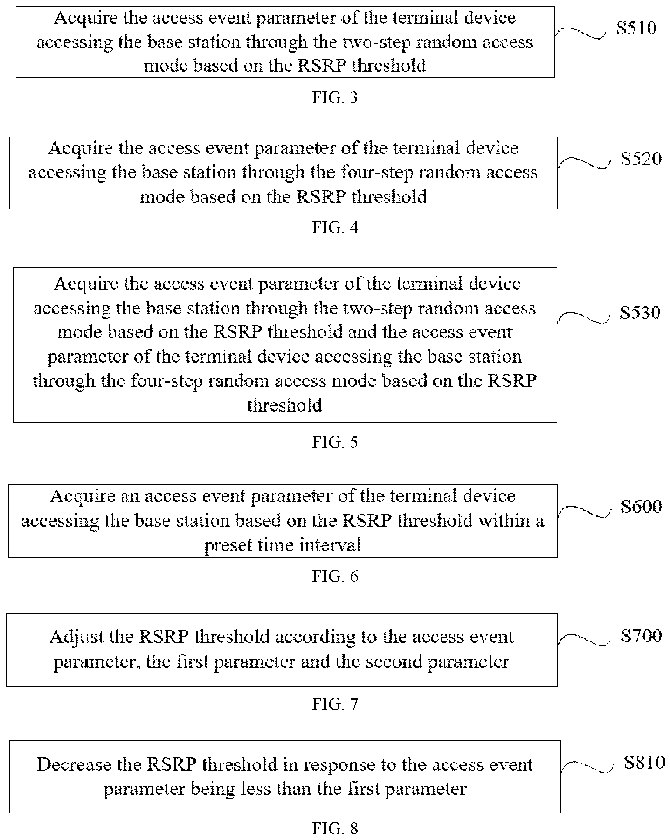

In addition, referring to FIG. 3 to FIG. 5, which depict flowcharts showing the methods for access optimization according to another three embodiments of the present disclosure, and the above operation S200 includes but is not limited to the following three cases.

In the first case, referring to FIG. 3, which depicts a flowchart showing a method for access optimization according to another embodiment of the present disclosure. The above operation S200 includes but is not limited to operation S510 in this case.

At S510, the access event parameter of the terminal device accessing the base station through the two-step random access mode based on the RSRP threshold, is acquired.

In an embodiment, a plurality of terminal devices selects the two-step random access mode or the four-step random access mode to access the base station according to the comparison between the measured RSRP value and the RSRP threshold. And thus, the base station in an embodiment of the present disclosure can count the situation where the terminal devices access the base station through the two-step random access mode, so that the access event parameter of the terminal device accessing the base station under the two-step random access mode can be acquired.

In the second case, referring to FIG. 4, which depicts a flowchart showing a method for access optimization according to another embodiment of the present disclosure. The above operation S200 includes but is not limited to operation S520 in this case.

At S520, the access event parameter of the terminal device accessing the base station through the four-step random access mode based on the RSRP threshold, is acquired.

In an embodiment, a plurality of terminal devices selects a two-step random access mode or a four-step random access mode to access the base station according to the comparison between the measured RSRP value and the RSRP threshold. And thus, the base station in an embodiment of the present disclosure can count the situation where the terminal devices access the base station through the four-step random access mode, so that the access event parameter of the terminal device accessing the base station under the four-step random access mode can be acquired.

In the third case, referring to FIG. 5, which depicts a flowchart showing a method for access optimization according to another embodiment of the present disclosure. The above operation S200 includes but is not limited to operation S530 in this case.

At S530, the access event parameter of the terminal device accessing the base station through the two-step random access mode based on the RSRP threshold and the access event parameter of the terminal device accessing the base station through the four-step random access mode based on the RSRP threshold, are acquired.

**In** an embodiment, a plurality of terminal devices selects a two-step random access mode or a four-step random access mode to access the base station according to the comparison between the measured RSRP value and the RSRP threshold. And thus, the base station in an embodiment of the present disclosure can count the situation where the terminal devices access the base station through the two-step random access mode and the four-step random access mode respectively, so that the access event parameters of the terminal device accessing the base station under the two-step random access mode and under the four-step random access mode can be acquired respectively.

In addition, referring to FIG. 6, which depicts a flowchart showing a method for access optimization according to another embodiment of the present disclosure. In an implementation, the above operation S200 includes but is not limited to operation S600.

At S600, an access event parameter of the terminal device accessing the base station based on the RSRP threshold within a preset time interval, is acquired.

In an embodiment, after the terminal device selects the random-access mode to access the base station according to the comparison between the measured RSRP value and the RSRP threshold, the base station can perform a counting on the access situation of the terminal devices within the preset time interval, so as to obtain the access event parameter of the terminal device accessing the base station in the preset time interval.

It is worth noting that if the preset time interval expires, the access event parameter is reset to zero, and the counting is re-preformed within a subsequent preset time interval.

In addition, referring to FIG. 7, which depicts a flowchart showing a method for access optimization according to another embodiment of the present disclosure. In an implementation, the preset parameters include a first parameter and a second parameter, and the first parameter is less than the second parameter. The above operation S300 includes but is not limited to operation S700.

At S700, the RSRP threshold is adjusted according to the access event parameter, the first parameter and the second parameter.

In an embodiment, the preset parameters include the first parameter and the second parameter. Therefore, three ranges are formed by the first parameter and the second parameter in an embodiment of the present disclosure, i.e., the range in which the parameter value is less than the first parameter, the range in which the parameter value is greater than or equal to the first parameter and less than the second parameter, and the range in which the parameter value is greater than the second parameter. Then, the access event parameter is compared with the first parameter and the second parameter in an embodiment of the present disclosure, and corresponding adjustment of the RSRP threshold is performed according to the range in which the access event parameter falls.

In addition, referring to FIG. 8 to FIG. 10, which depict flowcharts showing a method for access optimization according to three additional embodiments of the present disclosure. When the access event parameter is the access event parameter for the terminal to access the base station through the two-step random access mode based on the RSRP threshold, the above operation S700 includes but is not limited to the following three cases.

In the first case, referring to FIG. 8, which depicts a flowchart showing a method for access optimization according to another embodiment of the present disclosure. The above operation S700 includes but is not limited to operation S810 in this case.

At S810, the RSRP threshold is decreased in response to the access event parameter being less than the first parameter.

In an embodiment, after the base station acquires the access event parameter of the terminal device accessing the base station through the two-step random access mode, and the access event parameter is the number of access failure events, the ratio of the number of access failure events to the total number of access events, or the ratio of the number of access failure events to the number of access success events in the two-step random access mode, then the access event parameter being less than the first parameter indicates that the terminal device can easily access the base station through the two-step random access mode under this RSRP threshold, and the access success rate is high, but the number of terminal devices accessing the base station through the two-step random access mode may be less than as desired. Therefore, in order to enable more terminal devices to access the base station through the two-step random access mode, the RSRP threshold can be appropriately decreased while keeping the success rate from dropping too much in an embodiment of the present disclosure.

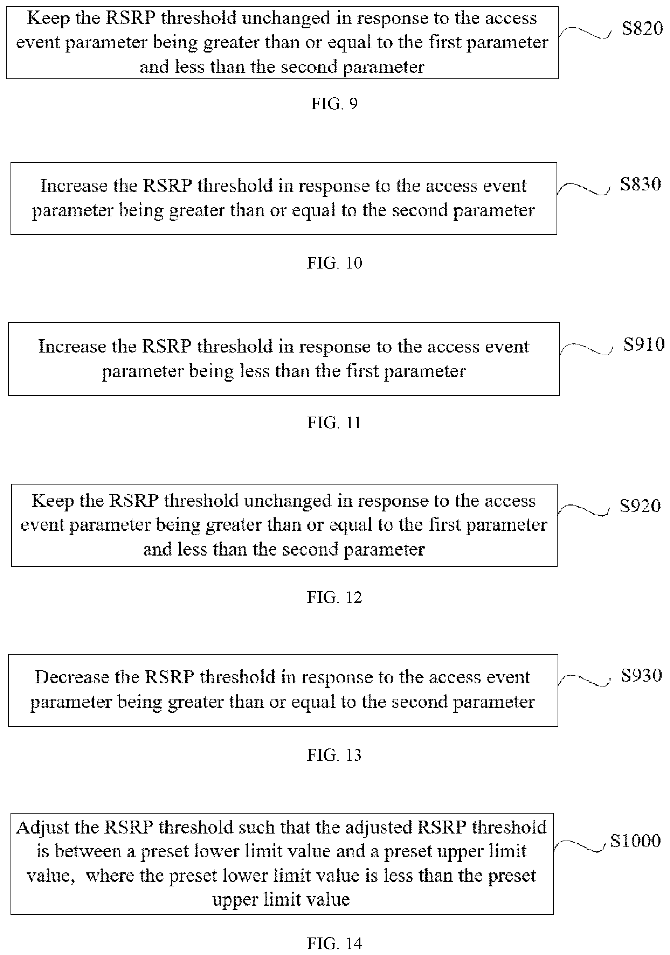

In the second case, referring to FIG. 9, which depicts a flowchart showing a method for access optimization according to another embodiment of the present disclosure. The above operation S700 includes but is not limited to operation S820 in this case.

At S820, the RSRP threshold is kept unchanged in response to the access event parameter being greater than or equal to the first parameter and less than the second parameter,
In an embodiment, after the base station acquires the access event parameter of the terminal device accessing the base station through the two-step random access mode, and the access event parameter is the number of access failure events, the ratio of the number of access failure events to the total number of access events, or the ratio of the number of access failure events to the number of access success events in the two-step random access mode, then, the access event parameter being greater than or equal to the first parameter and being less than the second parameter indicates that the access success rate of the terminal device accessing the base station through the two-step random access mode and the number of accessing terminal devices are balanced, with this RSRP threshold. Therefore, in this case, the RSRP threshold is kept unchanged in an embodiment of the present disclosure.

In the third case, referring to FIG. 10, which depicts a flowchart showing a method for access optimization according to another embodiment of the present disclosure. The above operation S700 includes but is not limited to operation S830 in this case.

At S830, the RSRP threshold is increased in response to the access event parameter being greater than or equal to the second parameter.

In an embodiment, after the base station acquires the access event parameter of the terminal device accessing the base station through the two-step random access mode, and the access event parameter is the number of access failure events, the ratio of the number of access failure events to the total number of access events, or the ratio of the number of access failure events to the number of access success events in the two-step random access mode, then, the access event parameter being greater than the second parameter indicates that, it is ineffective for the terminal device to access the base station through the two-step random access mode with this RSRP threshold, and the access success rate is low. Therefore, the RSRP threshold can be appropriately increased in order to increase the access success rate, in an embodiment of the present disclosure.

In addition, referring to FIG. 11 to FIG. 13, which depict flowcharts showing a method for access optimization according to three additional embodiments of the present disclosure. When the access event parameter is the access event parameter for the terminal device to access the base station through the four-step random access mode based on the RSRP threshold, the above step S700 includes but is not limited to the following three cases.

In the first case, referring to FIG. 11, which depicts a flowchart showing a method for access optimization according to another embodiment of the present disclosure. The above operation S700 includes but is not limited to operation S910 in this case.

At S910, the RSRP threshold is increased in response to the access event parameter being less than the first parameter.

In an embodiment, after the base station acquires the access event parameter of the terminal device accessing the base station through the four-step random access mode, and the access event parameter is the number of access failure events, the ratio of the number of access failure events to the total number of access events, or the ratio of the number of access failure events to the number of access success events in the four-step random access mode, then the access event parameter being less than the first parameter indicates that the terminal device can easily access the base station through the two-step random access mode under this RSRP threshold, and the access success rate is high, but the number of terminal devices accessing the base station through the four-step random access mode may be less than as desired. Therefore, in order to enable more terminal devices to access the base station through the four-step random access mode, the RSRP threshold can be appropriately increased while keeping the success rate from dropping too much in an embodiment of the present disclosure.

In the second case, referring to FIG. 12, which depicts a flowchart showing a method for access optimization according to another embodiment of the present disclosure. The above operation S700 includes but is not limited to operation S920 in this case.

At S920, the RSRP threshold is kept unchanged in response to the access event parameter being greater than or equal to the first parameter and less than the second parameter.

In an embodiment, after the base station acquires the access event parameter of the terminal device accessing the base station through the four-step random access mode, and the access event parameter is the number of access failure events, the ratio of the number of access failure events to the total number of access events, or the ratio of the number of access failure events to the number of access success events in the four-step random access mode, then, the access event parameter being greater than or equal to the first parameter and being less than the second parameter indicates that the access success rate of the terminal device accessing the base station through the four-step random access mode and the number of accessing terminal devices are balanced, with this RSRP threshold. Therefore, in this case, the RSRP threshold is kept unchanged in an embodiment of the present disclosure.

In the third case, referring to FIG. 13, which depicts a flowchart showing a method for access optimization according to another embodiment of the present disclosure. The above operation S700 includes but is not limited to operation S930 in this case.

At S930, the RSRP threshold is decreased in response to the access event parameter being greater than or equal to the second parameter.

In an embodiment, after the base station acquires the access event parameter of the terminal device accessing the base station through the four-step random access mode, and the access event parameter is the number of access failure events, the ratio of the number of access failure events to the total number of access events, or the ratio of the number of access failure events to the number of access success events in the four-step random access mode, then, the access event parameter being greater than the second parameter indicates that, it is ineffective for the terminal device to access the base station through the four-step random access mode with this RSRP threshold, and the access success rate is low. Therefore, the RSRP threshold can be appropriately decreased in order to increase the access success rate, in an embodiment of the present disclosure.

In addition, referring to FIG. 14, which depicts a flowchart showing a method for access optimization method according to another embodiment of the present disclosure. In an embodiment, the adjustment of the RSRP threshold in the operation S300 described above includes but is not limited to operation S1000.

At S1000, the RSRP threshold is adjusted such that the adjusted RSRP threshold is between a preset lower limit value and a preset upper limit value, where the preset lower limit value is less than the preset upper limit value.

In an embodiment, if the amount of adjustment is too much in the adjustment of the RSRP threshold by the base station, the RSRP threshold will be too high or too low, which will affect the access of the terminal devices. Therefore, in order to prevent the adjusted RSRP threshold from being too high or too low, a preset lower limit value and a preset upper limit value are set in an embodiment of the present disclosure, and the base station will ensure that the adjusted RSRP threshold is between the preset lower limit value and the preset upper limit value while adjusting the RSRP threshold.

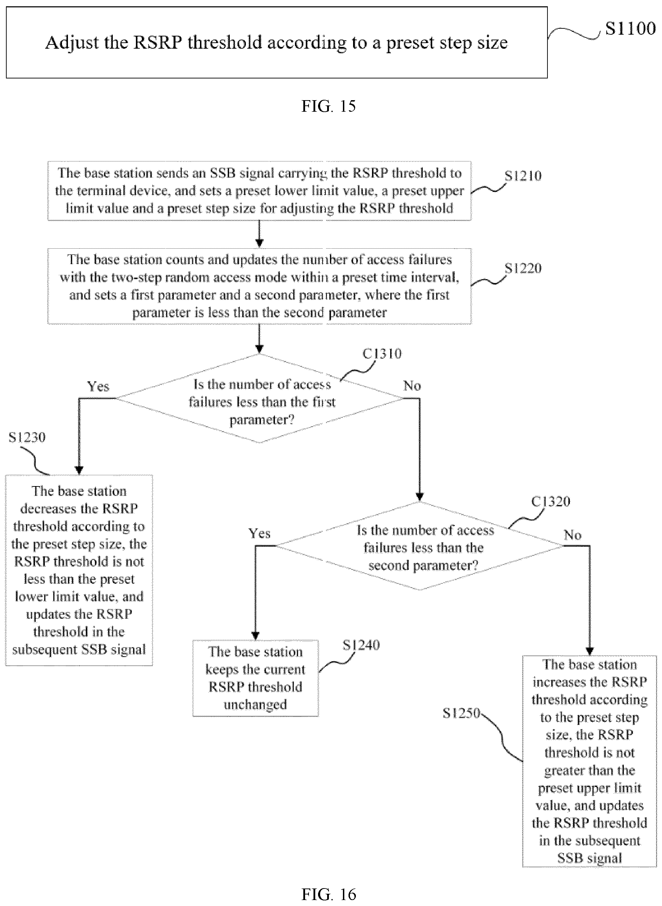

In addition, referring to FIG. 15, which depicts a flowchart showing a method for access optimization method according to another embodiment of the present disclosure. In an embodiment, the adjustment of the RSRP threshold in the operation S300 described above includes but is not limited to operation S1100.

At S1100, the RSRP threshold is adjusted according to a preset step size.

In an embodiment, the base station sets a preset step size for adjusting the RSRP threshold, and the RSRP threshold will be adjusted step by step according to the preset step size each time the base station adjusts the RSRP threshold. According to an embodiment of the present disclosure, an appropriate preset step size is to avoid excessive adjustment during each RSRP threshold adjustment.

In addition, referring to FIG. 16, which depicts a flowchart showing a method for access optimization according to another embodiment of the present disclosure. In an embodiment, the method for access optimization includes but is not limited to operations S1210, S1220, C1310, S1230, C1320, S1240 and S1250.

At S1210, the base station sends an SSB signal carrying the RSRP threshold to the terminal device, and sets a preset lower limit value, a preset upper limit value and a preset step size for adjusting the RSRP threshold.

At S1220, the base station counts and updates the number of access failures with the two-step random access mode within a preset time interval, and sets a first parameter and a second parameter, where the first parameter is less than the second parameter.

At C1310, a determination as to whether the number of access failures is less than the first parameter, if so, operation S1230 is performed, otherwise operation C1320 is performed.

At S1230, the base station decreases the RSRP threshold according to the preset step size, the RSRP threshold is not less than the preset lower limit value, and updates the RSRP threshold in the subsequent SSB signal.

At C1320, a determination is performed as to whether the number of access failures is less than the second parameter, if so, operation S1240 is performed, otherwise operation S1250 is performed.

At S1240, the base station keeps the current RSRP threshold unchanged.

At S1250, the base station increases the RSRP threshold according to the preset step size, the RSRP threshold is not greater than the preset upper limit value, and updates the RSRP threshold in the subsequent SSB signal.

In an embodiment, the base station sends an SSB signal which carries an RSRP threshold ξ, and sets the range of the threshold with a preset lower limit ξ_"min" and a preset upper limit ξ_"max" and a preset step size Δξ. Then, the base station updates the number η of access failures with the two-step random access mode in a preset time interval T_η, and sets two thresholds of access failures to a first parameter η_1 and a second parameter η_2, where 0<η_1<η_2. The initial value of the number of failures is zero. If the preset time interval is reached, the number of failures is reset to zero, and the number of failures is counted again in the new preset time interval. An access failure event can be defined as: the base station detects the MsgA Physical Random-Access Channel (PRACH) signal sent by the terminal device, but fails to parse the MsgA PUSCH signal sent by the terminal device. Finally, when learning that η<η_1 through comparison, the base station decreases the RSRP threshold by ξ=ξ-Δξ according to the preset step size, and ensures ξ≥ξ_"min", and updates the RSRP threshold in the subsequent SSB signal.

In an embodiment, the base station sends an SSB signal which carries an RSRP threshold ξ, and sets the range of the threshold with a preset lower limit ξ_"min" and a preset upper limit ξ_"max" and a preset step size Δξ. Then, the base station updates the number η of access failures with the two-step random access mode in a preset time interval T_η, and sets two threshold values of access failures to a first parameter η_1 and a second parameter η_2, where 0<η_1<η_2. The initial value of the number of failures is zero. If the preset time interval is reached, the number of failures is reset to zero, and the number of failures is counted again in the new preset time interval. An access failure event can be defined as: the base station detects the MsgA PRACH signal sent by the terminal device, but fails to parse the MsgA PUSCH signal sent by the terminal device. Finally, the base station learns that η_1≤η<η_2 through comparison, and then keeps the current RSRP threshold ξ unchanged.

In an embodiment, the base station sends an SSB signal which carries an RSRP threshold ξ, and sets the range of the threshold with a preset lower limit ξ_"min" and a preset upper limit ξ_"max" and a preset step size Δξ. Then, the base station updates the number η of access failures with the two-step random access mode in a preset time interval T_η, and sets two thresholds of access failures to a first parameter η_1 and a second parameter η_2, where 0<η_1<η_2. The initial value of the number of failures is zero. If the preset time interval is reached, the number of failures is reset to zero, and the number of failures is counted again in the new preset time interval. An access failure event can be defined as: the base station detects the MsgA PRACH signal sent by the terminal device, but fails to parse the MsgA PUSCH signal sent by the terminal device. Finally, when learning that η_2≤η through comparison, the base station increases the RSRP threshold by ξ=ξ+ Δξ according to the preset step size, and ensures ξ≤ξ_"max", and updates the RSRP threshold in the subsequent SSB signal.

It is worth noting that the implementation and corresponding technical effects of the method for access optimization in this embodiment of the present disclosure correspond to the embodiments as described with respect to the method for access optimization above.

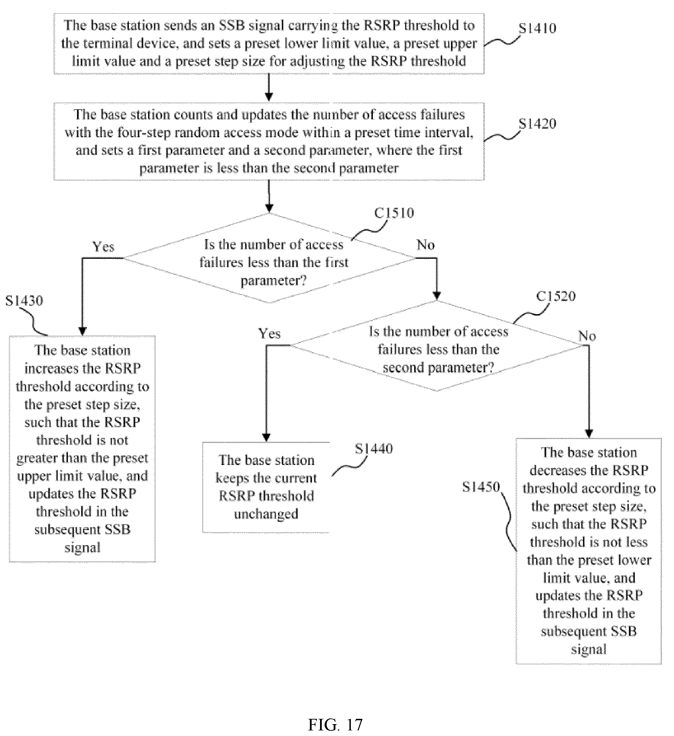

In addition, referring to FIG. 17, which depicts a flowchart showing a method for access optimization according to another embodiment of the present disclosure. In an embodiment, the method for access optimization includes but is not limited to operations S1410, S1420, C1510, S1430, C1520, S1440 and S1450.

At S1410, the base station sends an SSB signal carrying the RSRP threshold to the terminal device, and sets a preset lower limit value, a preset upper limit value and a preset step size for adjusting the RSRP threshold.

At S1420, the base station counts and updates the number of access failures with the four-step random access mode within a preset time interval, and sets a first parameter and a second parameter, where the first parameter is less than the second parameter.

At C1510, a determination as to whether the number of access failures is less than the first parameter, if so, operation S1430 is performed, otherwise operation C1520 is performed.

At S1430, the base station increases the RSRP threshold according to the preset step size, such that the RSRP threshold is not greater than the preset upper limit value, and updates the RSRP threshold in the subsequent SSB signal.

At C1520, a determination is performed as to whether the number of access failures is less than the second parameter, if so, operation S1440 is performed, otherwise operation S1450 is performed.

At S1440, the base station keeps the current RSRP threshold unchanged.

At S1450, the base station decreases the RSRP threshold according to the preset step size, such that the RSRP threshold is not less than the preset lower limit value, and updates the RSRP threshold in the subsequent SSB signal.

It is worth noting that the implementation and corresponding technical effects of the method for access optimization in this embodiment of the present disclosure correspond to the embodiments as described with respect to the method for access optimization above.

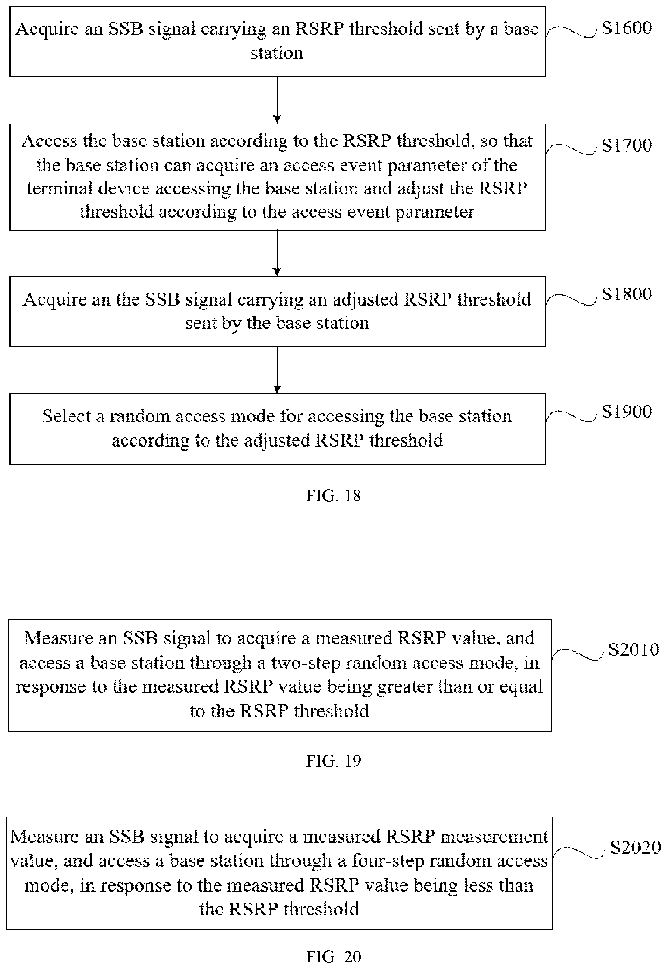

As shown in FIG. 18, which depicts a flowchart showing a method for access optimization according to an embodiment of the present disclosure, which can be performed by a terminal device. The method includes but is not limited to the operations S1600, S1700, S1800 and S1900.

At S1600, an SSB signal carrying an RSRP threshold sent by a base station, is acquired.

At S1700, the base station is accessed according to the RSRP threshold, so that the base station can acquire an access event parameter of the terminal device accessing the base station and adjust the RSRP threshold according to the access event parameter.

At S1800, an the SSB signal carrying an adjusted RSRP threshold sent by the base station, is acquired.

At S1900, a random-access mode for accessing the base station is selected according to the adjusted RSRP threshold.

In an embodiment, due to the method for access optimization with the above operations S1600, S1700, S1800 and S1900, the base station can adjust the RSRP threshold according to the actual access event parameter of the terminal device. And the number of accessing terminal devices in different random-access modes and the resource allocation can be controlled by the adjustment of the RSRP threshold, thereby improving the success rate of assessing for terminal devices and resource utilization efficiency.

It is worth noting that the implementation and corresponding technical effects of the method for access optimization in this embodiment of the present disclosure correspond to the embodiments as described with respect to the method for access optimization above.

In addition, referring to FIG. 19 to FIG. 20, which depict flowcharts showing methods for access optimization according to two additional embodiments of the present disclosure. Accessing the base station according to the RSRP threshold in the above operation S1700 includes but is not limited to the following two cases.

In the first case, refer to FIG. 19, which depicts a flowchart showing a method for access optimization method according to another embodiment of the present disclosure. Accessing the base station according to the RSRP threshold in the above operation S1700, includes but is not limited to operation S2010.

At S2010, an SSB signal is measured to acquire a measured RSRP value, and a base station is accessed through a two-step random access mode, in response to the measured RSRP value being greater than or equal to the RSRP threshold.

It is worth noting that the implementation and corresponding technical effects of the method for access optimization in this embodiment of the present disclosure correspond to the embodiments as described with respect to the method for access optimization above.

In the second case, refer to FIG. 20, which depicts a flowchart showing a method for access optimization according to another embodiment of the present disclosure. Accessing the base station according to the RSRP threshold in the above operation S1700, includes but is not limited to operation S2020.

At S2020, an SSB signal is measured to acquire a measured RSRP value, and a base station is accessed through a four-step random access mode, in response to the measured RSRP value being less than the RSRP threshold.

It is worth noting that the implementation and corresponding technical effects of the method for access optimization in this embodiment of the present disclosure correspond to the embodiments as described with respect to the method for access optimization above.

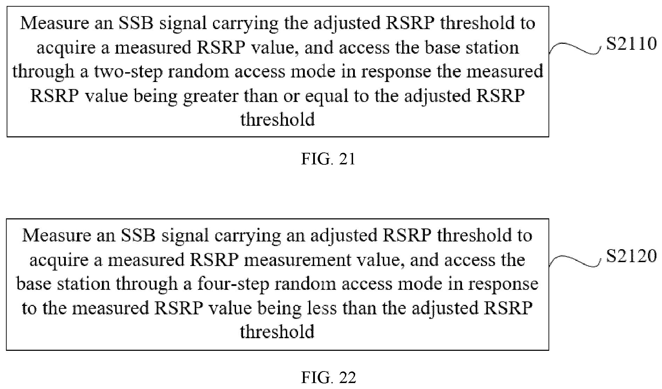

In addition, referring to FIG. 21 to FIG. 22, which depict flowcharts showing the methods for access optimization according to another two embodiments of the present disclosure, and the above operation S 1900 includes but is not limited to the following two cases.

In the first case, referring to FIG. 21, which depicts a flowchart showing a method for access optimization according to another embodiment of the present disclosure. The above operation S1900 includes but is not limited to operation S2110 in this case.

At S2110, an SSB signal carrying the adjusted RSRP threshold is measured to acquire a measured RSRP value, and the base station is accessed through a two-step random access mode in response to the measured RSRP value being greater than or equal to the adjusted RSRP threshold.

It is worth noting that the implementation and corresponding technical effects of the method for access optimization in this embodiment of the present disclosure correspond to the embodiments as described with respect to the method for access optimization above.

In the second case, referring to FIG. 22, which depicts a flowchart showing a method for access optimization according to another embodiment of the present disclosure. The above operation S1900 includes but is not limited to operation S2120 in this case.

At S2120, an SSB signal carrying an adjusted RSRP threshold is measured to acquire a measured RSRP value, and the base station is accessed through a four-step random access mode in response to the measured RSRP value being less than the adjusted RSRP threshold.

It is worth noting that the implementation and corresponding technical effects of the method for access optimization in this embodiment of the present disclosure correspond to the embodiments as described with respect to the method for access optimization above.

Based on the above method for access optimization, some embodiments of the base station, the terminal device and the computer-readable storage medium of the present disclosure are proposed below.

In addition, an embodiment of the present disclosure provides a base station, which includes a memory, a processor and a computer program stored in the memory and executable by the processor.

The processor and the memory may be connected by a bus or other means.

It should be noted that the base station in this embodiment can correspond to the base station in the system architecture platform in the embodiment shown in FIG. 1, and can constitute a part of the system architecture platform in the embodiment shown in FIG. 1, both of which belong to the same inventive concept, so they have the same principle and beneficial effects, and will not be described in detail here.

Non-transitory software programs and instructions for the method for access optimization of any one of the above embodiments are stored in a memory which when executed by a processor, causes the processor to carry out method for access optimization of any one of the above embodiments, for example, operations S100 to S400 described in conjunction with FIG. 2, S510 described in conjunction with FIG. 3, S520 described in conjunction with FIG. 4, S530 described in conjunction with FIG. 5, S600 described in conjunction with FIG. 6, S700 described in conjunction with FIG. 7, S810 described in conjunction with FIG. 8, S820 described in conjunction with FIG. 9, S830 described in conjunction with FIG. 10, S910 described in conjunction with FIG. 11, S920 described in conjunction with FIG. 12, S930 described in conjunction with FIG. 13, S1000 described in conjunction with FIG. 14, S1100 described in conjunction with FIG. 15, S1210 to S1250 described in conjunction with FIG. 16, or S1410 to S1450 described in conjunction with FIG. 17.

In addition, an embodiment of the application provides a terminal device, which includes a memory, a processor and a computer program stored in the memory and executable by the processor.

The processor and the memory may be connected by a bus or other means.

It should be noted that the terminal device described in this embodiment can correspond to the terminal device in the system architecture platform in the embodiment shown in FIG. 1, and can constitute a part of the system architecture platform in the embodiment shown in FIG. 1, both of which belong to the same inventive concept, so they have the same principle and beneficial effects, and will not be described in detail here.

Non-transitory software programs and instructions for the method for access optimization of any one of the above embodiments are stored in a memory which, when executed by a processor, causes the processor to carry out the method for access optimization of any one of the above embodiments, for example, the operations S1600 to S1900 described in conjunction with FIG. 18, S2010 described in conjunction with FIG. 19, S2020 described in conjunction with FIG. 20, S2110 described in conjunction with FIG. 21, or S2120 described in conjunction with FIG. 22.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

In addition, an embodiment of the application further provides a computer-readable storage medium storing a computer-executable instruction which, when executed by a processor, causes the processor to carry out any one of the methods as described above. For example, when the instruction is executed by a processor, causes the processor to carry out method for access optimization of any one of the above embodiments, for example, operations S100 to S400 described in conjunction with FIG. 2, S510 described in conjunction with FIG. 3, S520 described in conjunction with FIG. 4, S530 described in conjunction with FIG. 5, S600 described in conjunction with FIG. 6, S700 described in conjunction with FIG. 7, S810 described in conjunction with FIG. 8, S820 described in conjunction with FIG. 9, S830 described in conjunction with FIG. 10, S910 described in conjunction with FIG. 11, S920 described in conjunction with FIG. 12, S930 described in conjunction with FIG. 13, S1000 described in conjunction with FIG. 14, S1100 described in conjunction with FIG. 15, S1210 to S1250 described in conjunction with FIG. 16, or S1410 to S1450 described in conjunction with FIG. 17. Alternatively, when the instruction is executed by a processor, causes the processor to carry out the method for access optimization of any one of the above embodiments, for example, the operations S1600 to S1900 described in conjunction with FIG. 18, S2010 described in conjunction with FIG. 19, S2020 described in conjunction with FIG. 20, S2110 described in conjunction with FIG. 21, or S2120 described in conjunction with FIG. 22.

According to an embodiment of the present disclosure, there is provided a method for access optimization, which is performed by a base station, the method includes, sending a synchronization signal block (SSB) signal carrying a reference signal receiving power (RSRP) threshold to a terminal device; acquiring an access event parameter of the terminal device accessing the base station based on the RSRP threshold; adjusting the RSRP threshold according to the access event parameter and a preset parameter; and sending an SSB signal carrying the adjusted RSRP threshold to the terminal device, such that the terminal device selects a random access mode for accessing the base station according to the adjusted RSRP threshold. According to the technical scheme of the embodiment of the application, the base station sends an SSB signal with an RSRP threshold to the terminal device, then the terminal device measures the SSB signal to acquire a measured RSRP value and selects a two-step random access mode or a four-step random access mode to access the base station according to the measured RSRP value and the RSRP threshold, then the base station acquires an access event parameter of the terminal device accessing the base station, and adjusts the RSRP threshold according to the access event parameter and a preset parameter, so as to acquire the adjusted RSRP threshold, and then the base station sends another SSB signal with the adjusted RSRP threshold to the terminal device, so that the terminal device can select a two-step random access mode or a four-step random access mode according to the adjusted RSRP threshold. Therefore, the embodiment of the application can control the number of accessing terminal devices and resource allocation through the two-step random access mode or the four-step random access mode by adjusting the RSRP threshold, so as to avoid the excessive number of terminal devices accessing with one random access mode, thus reducing the likelihood of collision and improving the access success rate for the terminal devices and resource utilization efficiency.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium include, but are not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to ta person having ordinary skills in the art that communication media usually contains computer-readable instructions, data structures, program modules or other data in modulated data signals such as carrier waves or other transmission mechanisms, and can include any information delivery media.

## Claims

1. A method for access optimization, which is performed by a base station, comprising,
sending a synchronization signal block, SSB, signal carrying a reference signal receiving power, RSRP, threshold to a terminal device (S100);
acquiring an access event parameter of the terminal device accessing the base station based on the RSRP threshold (S200);
adjusting the RSRP threshold according to the access event parameter and a preset parameter (S300); and
sending an SSB signal carrying the adjusted RSRP threshold to the terminal device, such that the terminal device selects a random-access mode for accessing the base station according to the adjusted RSRP threshold (S400);
wherein, the access event parameter comprises at least one of, a number of access failure events, a ratio of access failure events to total access events in a same random-access mode, or a ratio of access failure events to access success events in a same random access mode; and
the preset parameter is intended to be compared with the access event parameter for adjusting the RSRP threshold.

2. The method of claim 1, wherein acquiring an access event parameter of the terminal device accessing the base station based on the RSRP threshold (S200), comprises one of,
acquiring the access event parameter of the terminal device accessing the base station through a two-step random access mode based on the RSRP threshold (S510);
acquiring the access event parameter of the terminal device accessing the base station through a four-step random access mode based on the RSRP threshold (S520); or
acquiring the access event parameter of the terminal device accessing the base station through the two-step random access mode based on the RSRP threshold and the access event parameter of the terminal device accessing the base station through the four-step random access mode based on the RSRP threshold (S530).

3. The method of claim 1, wherein acquiring an access event parameter of the terminal device accessing the base station based on the RSRP threshold (S200), comprises,
acquiring an access event parameter of the terminal device accessing the base station based on the RSRP threshold within a preset time interval (S600).

4. The method of claim 1, wherein the preset parameter is one of a plurality of preset parameters comprising a first parameter and a second parameter which is greater than the first parameter; and
adjusting the RSRP threshold according to the access event parameter and a preset parameter (S300), comprises,
adjusting the RSRP threshold according to the access event parameter, the first parameter, and the second parameter (S700).

5. The method of claim 4, wherein the access event parameter is the access event parameter for a terminal device to access the base station through a two-step random access mode based on the RSRP threshold; and
adjusting the RSRP threshold according to the access event parameter, the first parameter, and the second parameter (S700) comprises at least one of,
decreasing the RSRP threshold in response to the access event parameter being less than the first parameter (S810);
keeping the RSRP threshold unchanged in response to the access event parameter being greater than or equal to the first parameter and less than the second parameter (S820); or
increasing the RSRP threshold in response to the access event parameter being greater than or equal to the second parameter (S830).

6. The method of claim 4, wherein the access event parameter is the access event parameter for a terminal device to access the base station through a four-step random access mode based on the RSRP threshold; and
adjusting the RSRP threshold according to the access event parameter, the first parameter, and the second parameter (S700) comprises at least one of,
increasing the RSRP threshold in response to the access event parameter being less than the first parameter (S910);
keeping the RSRP threshold unchanged in response to the access event parameter being greater than or equal to the first parameter and less than the second parameter (S920); or
decreasing the RSRP threshold in response to the access event parameter being greater than or equal to the second parameter (S930).

7. The method of claim 1, wherein adjusting the RSRP threshold comprises,
adjusting the RSRP threshold such that the adjusted RSRP threshold is between a preset lower limit value and a preset upper limit value, wherein the preset lower limit value is less than the preset upper limit value (S1000).

8. The method of claim 1, wherein adjusting the RSRP threshold comprises,
adjusting the RSRP threshold according to a preset step size (S1100).

9. The method of any one of claim 1 to claim 8, wherein, the access event parameter comprises at least one of, a number of access failure events, a ratio of access failure events to total access events in a same random-access mode, or a ratio of access failure events to access success events in a same random-access mode.

10. A method for access optimization, which is performed by a terminal device, comprising,
acquiring a synchronization signal block, SSB, signal carrying a reference signal receiving power, RSRP, threshold sent by a base station (S1600);
accessing the base station according to the RSRP threshold, such that the base station acquires an access event parameter of the terminal device accessing the base station and adjusts the RSRP threshold according to the access event parameter (S1700);
acquiring another SSB signal carrying the adjusted RSRP threshold sent by the base station (S1800); and
selecting a random-access mode for accessing the base station according to the adjusted RSRP threshold (S1900);
wherein, the access event parameter comprises at least one of, a number of access failure events, a ratio of access failure events to total access events in a same random-access mode, or a ratio of access failure events to access success events in a same random access mode.

11. The method of claim 10, wherein, accessing the base station according to the RSRP threshold comprises at least one of,
measuring the SSB signal to acquire a measured RSRP value, and accessing the base station through a two-step random access mode, in response to the measured RSRP value being greater than or equal to the RSRP threshold (S2010); or
measuring the SSB signal to acquire a measured RSRP value, and accessing base station through a four-step random access mode, in response to the measured RSRP value being less than the RSRP threshold (S2020).

12. The method of claim 10, wherein selecting a random-access mode for accessing the base station according to the adjusted RSRP threshold comprises at least one of,
measuring the SSB signal carrying the adjusted RSRP threshold to acquire a measured RSRP value, and accessing the base station through a two-step random access mode in response the measured RSRP value being greater than or equal to the adjusted RSRP threshold (S2110); or
measuring an SSB signal carrying a measured RSRP threshold to acquire a measured RSRP value, and accessing the base station through a four-step random access mode, in response to the measured RSRP value being less than the adjusted RSRP threshold (S2120).

13. The method of any one of claim 10 to claim 12, wherein, the access event parameter comprises at least one of, a number of access failure events, a ratio of access failure events to total access events in a same random-access mode, or a ratio of access failure events to access success events in a same random-access mode.

14. A computer-readable storage medium storing a computer-executable instruction which, when executed by a processor causes the processor to carry out the method of any one of claim 1 to claim 9, or the method according to any one of claim 10 to claim 13.

15. A computer program comprising instructions which, when the program is executed by a computer, cause the computer to carry out the method of any one of claim 1 to claim 9, or the method according to any one of claim 10 to claim 13.

## Patentansprüche

1. Verfahren zur Zugriffsoptimierung, das von einer Basisstation durchgeführt wird, umfassend:
Senden eines Synchronisationssignalblock-, SSB-, Signals, das einen Referenzsignalempfangsleistungs-, RSRP-, Schwellenwert trägt, an eine Endgerät-Vorrichtung (S100);
Erfassen eines Zugriffsereignisparameters der Endgerät-Vorrichtung, die auf die Basisstation zugreift, auf der Basis des RSRP-Schwellenwertes (S200);
Anpassen des RSRP-Schwellenwertes gemäß dem Zugriffsereignisparameter und einem voreingestellten Parameter (S300); und
Senden eines SSB-Signals, das den angepassten RSRP-Schwellenwert trägt, an die Endgerät-Vorrichtung, so dass die Endgerät-Vorrichtung einen Zufallszugriffsmodus zum Zugreifen auf die Basisstation gemäß dem angepassten RSRP-Schwellenwert auswählt (S400);
wobei der Zugriffsereignisparameter mindestens eines von einer Anzahl von Zugriffsausfall-Ereignissen, einem Verhältnis von Zugriffsausfall-Ereignissen zu Gesamtzugriffsereignissen in einem gleichen Zufallszugriffsmodus oder einem Verhältnis von Zugriffsausfall-Ereignissen zu Zugriffserfolg-Ereignissen in einem gleichen Zufallszugriffsmodus umfasst; und
der voreingestellte Parameter dazu bestimmt ist, mit dem Zugriffsereignisparameter zum Anpassen des RSRP-Schwellenwertes verglichen zu werden.

2. Verfahren nach Anspruch 1, wobei das Erfassen eines Zugriffsereignisparameters der Endgerät-Vorrichtung, die auf die Basisstation zugreift, auf der Basis des RSRP-Schwellenwertes (S200) eines von Folgendem umfasst:
Erfassen des Zugriffsereignisparameters der Endgerät-Vorrichtung, die auf die Basisstation zugreift, durch einen zweistufigen Zufallszugriffsmodus auf der Basis des RSRP-Schwellenwertes (S510);
Erfassen des Zugriffsereignisparameters der Endgerät-Vorrichtung, die auf die Basisstation zugreift, durch einen vierstufigen Zufallszugriffsmodus auf der Basis des RSRP-Schwellenwertes (S520); oder
Erfassen des Zugriffsereignisparameters der Endgerät-Vorrichtung, die auf die Basisstation zugreift, durch den zweistufigen Zufallszugriffsmodus auf der Basis des RSRP-Schwellenwertes und des Zugriffsereignisparameters der Endgerät-Vorrichtung, die auf die Basisstation zugreift, durch den vierstufigen Zufallszugriffsmodus auf der Basis des RSRP-Schwellenwertes (S530).

3. Verfahren nach Anspruch 1, wobei das Erfassen eines Zugriffsereignisparameters der Endgerät-Vorrichtung, die auf die Basisstation zugreift, auf der Basis des RSRP-Schwellenwertes (S200) Folgendes umfasst:
Erfassen eines Zugriffsereignisparameters der Endgerät-Vorrichtung, die auf die Basisstation zugreift, auf der Basis des RSRP-Schwellenwertes innerhalb eines voreingestellten Zeitintervalls (S600).

4. Verfahren nach Anspruch 1, wobei der voreingestellte Parameter einer von einer Vielzahl von voreingestellten Parametern ist, die einen ersten Parameter und einen zweiten Parameter, der größer als der erste Parameter ist, umfassen; und
das Anpassen des RSRP-Schwellenwertes gemäß dem Zugriffsereignisparameter und einem voreingestellten Parameter (S300) Folgendes umfasst:
Anpassen des RSRP-Schwellenwertes gemäß dem Zugriffsereignisparameter, dem ersten Parameter und dem zweiten Parameter (S700).

5. Verfahren nach Anspruch 4, wobei der Zugriffsereignisparameter der Zugriffsereignisparameter für eine Endgerät-Vorrichtung zum Zugreifen auf die Basisstation durch einen zweistufigen Zufallszugriffsmodus auf der Basis des RSRP-Schwellenwertes ist; und
das Anpassen des RSRP-Schwellenwertes gemäß dem Zugriffsereignisparameter, dem ersten Parameter und dem zweiten Parameter (S700) mindestens eines von Folgendem umfasst:
Verringern des RSRP-Schwellenwertes als Reaktion darauf, dass der Zugriffsereignisparameter kleiner als der erste Parameter ist (S810);
Beibehalten des RSRP-Schwellenwertes unverändert als Reaktion darauf, dass der Zugriffsereignisparameter größer oder gleich dem ersten Parameter und kleiner als der zweite Parameter ist (S820); oder
Erhöhen des RSRP-Schwellenwertes als Reaktion darauf, dass der Zugriffsereignisparameter größer oder gleich dem zweiten Parameter ist (S830).

6. Verfahren nach Anspruch 4, wobei der Zugriffsereignisparameter der Zugriffsereignisparameter für eine Endgerät-Vorrichtung zum Zugreifen auf die Basisstation durch einen vierstufigen Zufallszugriffsmodus auf der Basis des RSRP-Schwellenwertes ist; und
das Anpassen des RSRP-Schwellenwertes gemäß dem Zugriffsereignisparameter, dem ersten Parameter und dem zweiten Parameter (S700) mindestens eines von Folgendem umfasst:
Erhöhen des RSRP-Schwellenwertes als Reaktion darauf, dass der Zugriffsereignisparameter kleiner als der erste Parameter ist (S910);
Beibehalten des RSRP-Schwellenwertes unverändert als Reaktion darauf, dass der Zugriffsereignisparameter größer oder gleich dem ersten Parameter und kleiner als der zweite Parameter ist (S920); oder
Verringern des RSRP-Schwellenwertes als Reaktion darauf, dass der Zugriffsereignisparameter größer oder gleich dem zweiten Parameter ist (S930).

7. Verfahren nach Anspruch 1, wobei das Anpassen des RSRP-Schwellenwertes Folgendes umfasst:
Anpassen des RSRP-Schwellenwertes derart, dass der angepasste RSRP-Schwellenwert zwischen einem voreingestellten unteren Grenzwert und einem voreingestellten oberen Grenzwert liegt, wobei der voreingestellte untere Grenzwert kleiner als der voreingestellte obere Grenzwert ist (S1000).

8. Verfahren nach Anspruch 1, wobei das Anpassen des RSRP-Schwellenwertes Folgendes umfasst:
Anpassen des RSRP-Schwellenwertes gemäß einer voreingestellten Schrittgröße (S1100).

9. Verfahren nach einem der Ansprüche 1 bis 8, wobei der Zugriffsereignisparameter mindestens eines von einer Anzahl von Zugriffsausfall-Ereignissen, einem Verhältnis von Zugriffsausfall-Ereignissen zu Gesamtzugriffsereignissen in einem gleichen Zufallszugriffsmodus oder einem Verhältnis von Zugriffsausfall-Ereignissen zu Zugriffserfolg-Ereignissen in einem gleichen Zufallszugriffsmodus umfasst.

10. Verfahren zur Zugriffsoptimierung, das von einer Endgerät-Vorrichtung durchgeführt wird, umfassend:
Erfassen eines Synchronisationssignalblock-, SSB-, Signals, das einen Referenzsignalempfangsleistungs-, RSRP-, Schwellenwert trägt, der von einer Basisstation gesendet wird (S1600);
Zugreifen auf die Basisstation gemäß dem RSRP-Schwellenwert, so dass die Basisstation einen Zugriffsereignisparameter der Endgerät-Vorrichtung erfasst, die auf die Basisstation zugreift, und den RSRP-Schwellenwert gemäß dem Zugriffsereignisparameter anpasst (S1700);
Erfassen eines weiteren SSB-Signals, das den angepassten RSRP-Schwellenwert trägt, der von der Basisstation gesendet wird (S1800); und
Auswählen eines Zufallszugriffsmodus zum Zugreifen auf die Basisstation gemäß dem angepassten RSRP-Schwellenwert (S1900);
wobei der Zugriffsereignisparameter mindestens eines von einer Anzahl von Zugriffsausfall-Ereignissen, einem Verhältnis von Zugriffsausfall-Ereignissen zu Gesamtzugriffsereignissen in einem gleichen Zufallszugriffsmodus oder einem Verhältnis von Zugriffsausfall-Ereignissen zu Zugriffserfolg-Ereignissen in einem gleichen Zufallszugriffsmodus umfasst.

11. Verfahren nach Anspruch 10, wobei das Zugreifen auf die Basisstation gemäß dem RSRP-Schwellenwert mindestens eines von Folgendem umfasst:
Messen des SSB-Signals, um einen gemessenen RSRP-Wert zu erfassen, und Zugreifen auf die Basisstation durch einen zweistufigen Zufallszugriffsmodus als Reaktion darauf, dass der gemessene RSRP-Wert größer oder gleich dem RSRP-Schwellenwert ist (S2010); oder
Messen des SSB-Signals, um einen gemessenen RSRP-Wert zu erfassen, und Zugreifen auf die Basisstation durch einen vierstufigen Zufallszugriffsmodus als Reaktion darauf, dass der gemessene RSRP-Wert kleiner als der RSRP-Schwellenwert ist (S2020).

12. Verfahren nach Anspruch 10, wobei das Auswählen eines Zufallszugriffsmodus zum Zugreifen auf die Basisstation gemäß dem angepassten RSRP-Schwellenwert mindestens eines von Folgendem umfasst:
Messen des SSB-Signals, das den angepassten RSRP-Schwellenwert trägt, um einen gemessenen RSRP-Wert zu erfassen, und Zugreifen auf die Basisstation durch einen zweistufigen Zufallszugriffsmodus als Reaktion darauf, dass der gemessene RSRP-Wert größer oder gleich dem angepassten RSRP-Schwellenwert ist (S2110); oder
Messen eines SSB-Signals, das einen gemessenen RSRP-Schwellenwert trägt, um einen gemessenen RSRP-Wert zu erfassen, und Zugreifen auf die Basisstation durch einen vierstufigen Zufallszugriffsmodus als Reaktion darauf, dass der gemessene RSRP-Wert kleiner als der angepasste RSRP-Schwellenwert ist (S2120).

13. Verfahren nach einem der Ansprüche 10 bis 12, wobei der Zugriffsereignisparameter mindestens eines von einer Anzahl von Zugriffsausfall-Ereignissen, einem Verhältnis von Zugriffsausfall-Ereignissen zu Gesamtzugriffsereignissen in einem gleichen Zufallszugriffsmodus oder einem Verhältnis von Zugriffsausfall-Ereignissen zu Zugriffserfolg-Ereignissen in einem gleichen Zufallszugriffsmodus umfasst.

14. Computerlesbares Speichermedium, das eine computerausführbare Anweisung speichert, die, wenn sie von einem Prozessor ausgeführt wird, den Prozessor veranlasst, das Verfahren nach einem der Ansprüche 1 bis 9 oder das Verfahren nach einem der Ansprüche 10 bis 13 auszuführen.

15. Computerprogramm, das Anweisungen umfasst, die, wenn das Programm von einem Computer ausgeführt wird, den Computer veranlassen, das Verfahren nach einem der Ansprüche 1 bis 9 oder das Verfahren nach einem der Ansprüche 10 bis 13 auszuführen.

## Revendications

1. Procédé d'optimisation d'accès, qui est réalisé par une station de base, comprenant les étapes consistant à :
transmettre un signal de bloc de signal de synchronisation, SSB, transportant un seuil de puissance de réception de signal de référence, RSRP, à un dispositif terminal (S100) ;
acquérir un paramètre d'événement d'accès du dispositif terminal accédant à la station de base sur la base du seuil RSRP (S200) ;
ajuster le seuil RSRP en fonction du paramètre d'événement d'accès et d'un paramètre prédéfini (S300) ; et
transmettre un signal SSB transportant le seuil RSRP ajusté au dispositif terminal, de sorte que le dispositif terminal sélectionne un mode d'accès aléatoire pour accéder à la station de base en fonction du seuil RSRP ajusté (S400) ;
dans lequel le paramètre d'événement d'accès comprend au moins l'un d'un nombre d'événements de défaillance d'accès, d'un ratio d'événements de défaillance d'accès sur des événements d'accès totaux dans un même mode d'accès aléatoire, ou d'un ratio d'événements de défaillance d'accès sur des événements de réussite d'accès dans un même mode d'accès aléatoire ; et
le paramètre prédéfini est destiné à être comparé au paramètre d'événement d'accès pour ajuster le seuil RSRP.

2. Procédé selon la revendication 1, dans lequel acquérir d'un paramètre d'événement d'accès du dispositif terminal accédant à la station de base sur la base du seuil RSRP (S200) comprend l'une des étapes consistant à :
acquérir le paramètre d'événement d'accès du dispositif terminal accédant à la station de base par l'intermédiaire d'un mode d'accès aléatoire à deux étapes sur la base du seuil RSRP (S510) ;
acquérir le paramètre d'événement d'accès du dispositif terminal accédant à la station de base par l'intermédiaire d'un mode d'accès aléatoire à quatre étapes sur la base du seuil RSRP (S520) ; ou
acquérir le paramètre d'événement d'accès du dispositif terminal accédant à la station de base par l'intermédiaire du mode d'accès aléatoire à deux étapes sur la base du seuil RSRP et le paramètre d'événement d'accès du dispositif terminal accédant à la station de base par l'intermédiaire du mode d'accès aléatoire à quatre étapes sur la base du seuil RSRP (S530).

3. Procédé selon la revendication 1, dans lequel acquérir un paramètre d'événement d'accès du dispositif terminal accédant à la station de base sur la base du seuil RSRP (S200) comprend l'étape consistant à :
acquérir un paramètre d'événement d'accès du dispositif terminal accédant à la station de base sur la base du seuil RSRP dans un intervalle de temps prédéfini (S600).

4. Procédé selon la revendication 1, dans lequel le paramètre prédéfini est l'un d'une pluralité de paramètres prédéfinis comprenant un premier paramètre et un second paramètre qui est supérieur au premier paramètre ; et
ajuster le seuil RSRP en fonction du paramètre d'événement d'accès et d'un paramètre prédéfini (S300) comprend l'étape consistant à :
ajuster le seuil RSRP en fonction du paramètre d'événement d'accès, du premier paramètre et du second paramètre (S700).

5. Procédé selon la revendication 4, dans lequel le paramètre d'événement d'accès est le paramètre d'événement d'accès pour qu'un dispositif terminal accède à la station de base par l'intermédiaire d'un mode d'accès aléatoire à deux étapes sur la base du seuil RSRP ; et
ajuster le seuil RSRP en fonction du paramètre d'événement d'accès, du premier paramètre et du second paramètre (S700) comprend au moins l'une des étapes consistant à :
diminuer le seuil RSRP en réponse au fait que le paramètre d'événement d'accès est inférieur au premier paramètre (S810) ;
maintenir le seuil RSRP inchangé en réponse au fait que le paramètre d'événement d'accès est supérieur ou égal au premier paramètre et inférieur au second paramètre (S820) ; ou
augmenter le seuil RSRP en réponse au fait que le paramètre d'événement d'accès est supérieur ou égal au second paramètre (S830).

6. Procédé selon la revendication 4, dans lequel le paramètre d'événement d'accès est le paramètre d'événement d'accès pour qu'un dispositif terminal accède à la station de base par l'intermédiaire d'un mode d'accès aléatoire à quatre étapes sur la base du seuil RSRP ; et
ajuster le seuil RSRP en fonction du paramètre d'événement d'accès, du premier paramètre et du second paramètre (S700) comprend au moins l'une des étapes consistant à :
augmenter le seuil RSRP en réponse au fait que le paramètre d'événement d'accès est inférieur au premier paramètre (S910) ;
maintenir le seuil RSRP inchangé en réponse au fait que le paramètre d'événement d'accès est supérieur ou égal au premier paramètre et inférieur au second paramètre (S920) ; ou
diminuer le seuil RSRP en réponse au fait que le paramètre d'événement d'accès est supérieur ou égal au second paramètre (S930).

7. Procédé selon la revendication 1, dans lequel ajuster le seuil RSRP comprend l'étape consistant à :
ajuster le seuil RSRP de sorte que le seuil RSRP ajusté se situe entre une valeur limite inférieure prédéfinie et une valeur limite supérieure prédéfinie, dans lequel la valeur limite inférieure prédéfinie est inférieure à la valeur limite supérieure prédéfinie (S1000).

8. Procédé selon la revendication 1, dans lequel ajuster le seuil RSRP comprend l'étape consistant à :
ajuster le seuil RSRP en fonction d'une taille de pas prédéfinie (S1100).

9. Procédé selon l'une quelconque des revendications 1 à 8, dans lequel le paramètre d'événement d'accès comprend au moins l'un d'un nombre d'événements de défaillance d'accès, d'un ratio d'événements de défaillance d'accès sur des événements d'accès totaux dans un même mode d'accès aléatoire, ou d'un ratio d'événements de défaillance d'accès sur des événements de réussite d'accès dans un même mode d'accès aléatoire.

10. Procédé d'optimisation d'accès, qui est réalisé par un dispositif terminal, comprenant les étapes consistant à :
acquérir un signal de bloc de signal de synchronisation, SSB, transportant un seuil de puissance de réception de signal de référence, RSRP, transmis par une station de base (S1600) ;
accéder à la station de base en fonction du seuil RSRP, de sorte que la station de base acquière un paramètre d'événement d'accès du dispositif terminal accédant à la station de base et ajuste le seuil RSRP en fonction du paramètre d'événement d'accès (S1700) ;
acquérir un autre signal SSB transportant le seuil RSRP ajusté transmis par la station de base (S1800) ; et
sélectionner un mode d'accès aléatoire pour accéder à la station de base en fonction du seuil RSRP ajusté (S1900) ;
dans lequel le paramètre d'événement d'accès comprend au moins l'un d'un nombre d'événements de défaillance d'accès, d'un ratio d'événements de défaillance d'accès sur des événements d'accès totaux dans un même mode d'accès aléatoire, ou d'un ratio d'événements de défaillance d'accès sur des événements de réussite d'accès dans un même mode d'accès aléatoire.

11. Procédé selon la revendication 10, dans lequel accéder à la station de base en fonction du seuil RSRP comprend au moins l'une des étapes consistant à :
mesurer le signal SSB pour acquérir une valeur RSRP mesurée, et accéder à la station de base par l'intermédiaire d'un mode d'accès aléatoire à deux étapes, en réponse au fait que la valeur RSRP mesurée est supérieure ou égale au seuil RSRP (S2010) ; ou
mesurer le signal SSB pour acquérir une valeur RSRP mesurée, et accéder à la station de base par l'intermédiaire d'un mode d'accès aléatoire à quatre étapes, en réponse au fait que la valeur RSRP mesurée est inférieure au seuil RSRP (S2020).

12. Procédé selon la revendication 10, dans lequel sélectionner un mode d'accès aléatoire pour accéder à la station de base en fonction du seuil RSRP ajusté comprend au moins l'une des étapes consistant à :
mesurer le signal SSB transportant le seuil RSRP ajusté pour acquérir une valeur RSRP mesurée, et accéder à la station de base par l'intermédiaire d'un mode d'accès aléatoire à deux étapes en réponse au fait que la valeur RSRP mesurée est supérieure ou égale au seuil RSRP ajusté (S2110) ; ou
mesurer un signal SSB transportant un seuil RSRP mesuré pour acquérir une valeur RSRP mesurée, et accéder à la station de base par l'intermédiaire d'un mode d'accès aléatoire à quatre étapes, en réponse au fait que la valeur RSRP mesurée est inférieure au seuil RSRP ajusté (S2120).

13. Procédé selon l'une quelconque des revendications 10 à 12, dans lequel le paramètre d'événement d'accès comprend au moins l'un d'un nombre d'événements de défaillance d'accès, d'un ratio d'événements de défaillance d'accès sur des événements d'accès totaux dans un même mode d'accès aléatoire, ou d'un ratio d'événements de défaillance d'accès sur des événements de réussite d'accès dans un même mode d'accès aléatoire.

14. Moyen de stockage lisible par ordinateur stockant une instruction exécutable par ordinateur qui, lorsqu'elle est exécutée par un processeur, amène le processeur à réaliser le procédé selon l'une quelconque des revendications 1 à 9, ou le procédé selon l'une quelconque des revendications 10 à 13.

15. Programme informatique comprenant des instructions qui, lorsque le programme est exécuté par un ordinateur, amènent l'ordinateur à réaliser le procédé selon l'une quelconque des revendications 1 à 9, ou le procédé selon l'une quelconque des revendications 10 à 13.
